# EUROPEAN PATENT SPECIFICATION

(11) **EP 1 550 605 B1**
(45) Date of publication and mention of the grant of the patent: **01.06.2016**
(21) Application number: 03748531.5
(22) Date of filing: 12.09.2003
(51) Int. Cl.: B62K 19/12, B22C 9/08, B22C 9/22, B22D 17/00, B22D 17/22

(54) **REAR FRAME FOR TWO-WHEELED MOTOR VEHICLE AND METHOD OF CASTING THE SAME**
HINTERER RAHMEN FÜR ZWEIRÄDRIGES KRAFTFAHRZEUG UND GIESSVERFAHREN DAFÜR
CADRE ARRIERE POUR VEHICULE A MOTEUR A DEUX ROUES ET SON PROCEDE DE MOULAGE

(30) Priority: 13.09.2002 JP 2002269261
(43) Date of publication of application: 06.07.2005
(73) Proprietor: YAMAHA MOTOR CO., LTD., Iwata-shi Shizuoka 438-8501 (JP)
(72) Inventor: SUMI, Takahiro, c/o Yamaha Motor Co., Ltd., Iwata-shi, Shizuoka 438-8501 (JP)
(74) Representative: Grünecker Patent- und Rechtsanwälte PartG mbB
(86) International application number: PCT/JP2003/011714
(87) International publication number: WO 2004/035373

(56) References cited:
- EP-A2- 0 322 305
- JP-A- 11 010 280
- JP-A- 62 282 749
- JP-A- 2002 160 041
- JP-B2- 2 706 959

## Description

The invention relates to a casting method for forming a rear frame of a a motorcycle according to the preamble of independent claim 1. Further, the invention relates to a rear frame for a motorcycle according to the preamble of independent claim 5.

Such a casting method for forming a rear frame and such a rear frame for a motorcycle can be taken from prior art document JP 11-010280 A.

Some rear frames of motorcycles are of a longitudinally elongated shape and have a pair of right and left rail parts connected by a plurality of cross members.

Japanese Patent No. 2706956 discloses e.g. a rear frame formed as a unitary body by casting. Besides, JP-A-Hei 11-010280 discloses a casting method in which molten metal is poured along a longitudinal direction of the rear frame through a single port in a rear part intended to ensure smoother flowing of the molten metal and prevent local temperature variations. In particular, said document teaches a rear frame of a motorcycle, wherein said frame comprises longitudinally extending right and left parts connected by a plurality of cross members. Said frame is made by pouring molten metal from a single gate in longitudinal direction of the frame, wherein the front end parts of the respective main frame pipes are relatively thick and the rear end parts become gradually thin. By means of said casting method a smooth flow of molten metal is ensured and local temperature variations are prevented.

However, in forming a rear frame which is longitudinally elongated and thin as a unitary body by casting or the like, when molten metal is poured through a port, the molten metal tends to be cooled on the way and cause casting defects such as underfills.

The further prior art document EP 0 322 305 A2 teaches a frame for a motorcycle, wherein left and right parts of the frame are individually formed by die-casting and welded together. In order to produce the respective part, a mold with a single gate is provided in combination with a runner and a plurality of dams in order to supply the molten metal to the cavity of the respective frame. With such a mold, the longitudinal extending part of the frame can be filled up from several points in order to ensure a smooth casting process.

It is an object of the present invention to provide a casting method for forming a rear frame of a motorcycle as well as a rear frame of motorcycle as indicated above, wherein high strength of the frame can be ensured with a reduced tendency to shorten casting effects, such as under-fills within the frame.

According to the present invention, said objective is solved by a casting method for forming a rear frame having the features of independent claim 1. Preferred embodiments are laid down in the dependent claims.

Moreover, said objective is also solved by a rear frame for a motorcycle having the features of independent claim 5. Preferred embodiments are laid down in the dependent claims.

The plurality of gate parts are provided along one of the rail parts and a plurality of molten metal pools are located separately along the other rail part.

A molten material pouring direction is substantially oriented from one of the rail parts to the other of the rail parts, in particular substantially crosswise and/or vertical to a longitudinal direction of the rear frame.

Furthermore, an arrangement of the gate parts at one of the rail parts along a longitudinal direction of the rear frame corresponds to an arrangement of molten metal pools at another one of the rail parts, wherein preferably the size and/or location of the gate parts and of the molten metal pools at a border area to the rail parts is substantially equal, in particular symmetrical to a virtual center plane provided centrically between the rail parts.

By providing such an improved method, the casting process, in particular the metal pouring process, can be shortened which greatly reduces casting defects.

Further, preferably a primary die-draw direction is substantially vertical to a longitudinal direction of the rear frame, and/or in that a secondary die-draw direction is substantially vertical to the longitudinal direction of the rear frame, and/or vertical to the primary die-draw direction.

Also, preferably the rear frame is substantially U-shaped in cross-section, wherein a first die is movable relative to a second die in a primary die-draw direction to form the rail parts, the cross members, runner portions, and/or a plurality of longitudinally extending rib parts therebetween.

More preferably, secondary die portions being slidable in a secondary die-draw direction relative to first and second main dies are provided for forming a damper attaching hole, a joint hole and/or a bracket attaching hole.

Since the rear frame, which is of a longitudinally elongated shape and provided with a pair of right and left rail parts connected by a plurality of cross members, is formed by die-casting, the molten metal tends to be cooled on the way as it gets thinner. However, since a plurality of gate parts to pour the molten metal through are located separately along the rail parts, the metal pouring process can be shortened and casting defects such as underfills can be prevented.

The, plurality of gate parts are provided along one of the rail parts and a plurality of molten metal pools are located separately along the other rail part.

Further, preferably in a casting state of the rear frame a plurality of runners are provided connecting the rail parts.

Furthermore, preferably an arrangement of the gate parts at one of the rail parts along a longitudinal direction of the rear frame corresponds to an arrangement of molten metal pools at another one of the rail parts, wherein preferably the size and/or location of the gate parts and of the molten metal pools at a border area to the rail parts is substantially equal, in particular symmetrical to a virtual center plane provided centrically between the rail parts.

Still further, preferably the rail parts are connected to one another at a first end thereof, preferably a rear end of the rear frame and/or in that the rail parts are provided with connecting portions, preferably comprising upper joint parts and/or lower joint parts, at another end thereof, preferably being a front end of the rear frame.

Moreover, preferably at least one of the cross members is provided with a preferably die-cast, preferably circular damper attaching hole extending along a direction of the cross member, in particular vertically to a longitudinal direction of the rear frame.

Also, preferably outer surfaces of joint parts of the rail parts are provided with preferably die-cast joint hole parts extending in a direction substantially vertical to a longitudinal direction of the rear frame and/or horizontally in an inbuilt state of the rear frame.

According to a preferred embodiment, the rail parts are provided with unitarily formed rib elements extending along a longitudinal direction of the rail parts at upper and/or lower edges thereof.

According to a further preferred embodiment, the rail parts comprise a first rib, preferably being an upper rib, extending inwardly and/or a second rib, preferably being a lower rib, extending outwardly of the rear frame if seen in a cross-sectional view along a longitudinal direction of the rear frame.

According to a still further preferred embodiment, the cross members connect upper edges of the rail parts so that the paired right and left rail parts and the cross members form a U-shape which opens downward in a cross-section perpendicular to a longitudinal direction of the vehicle in a mounted state of the rear frame.

Additionally or alternatively to any of the above embodiments, a first distance between a joint part located closest to a most front position and a joint part located closest to a most rear position in a direction perpendicular to a die draw direction is greater than a second distance between a joint part located closest to a highest position and a joint part located closest to a lowest position in the die draw direction.

Further preferred embodiments of the invention are subject to the respective subclaims.

In the following, the invention will be described in greater detail by means of preferred embodiments thereof with reference to the attached drawings, wherein:
- Fig. 1: is a side view of a motorcycle using a rear frame;
- FIG. 2: is a side view of a body frame;
- FIG. 3: is a side view of the body frame before the rear frame is assembled;
- Fig. 4: is a cross-sectional view taken along the line IV-IV in Fig. 2;
- Fig. 5: is a cross-sectional view taken along the line V-V in Fig. 2;
- FIG. 6: is a side view of a rear frame;
- FIG. 7: is a side view of a rear frame;
- Fig. 8: is a cross-sectional view taken along the line VIII-VIII in Fig. 7;
- Fig. 9: is a cross-sectional view taken along the line IX-IX in Fig. 7;
- Fig. 10: is a cross-sectional view taken along the line X-X in Fig. 7;
- Fig. 11: is a cross-sectional view taken along the line XI-XI in Fig. 7;
- Fig. 12: is a cross-sectional view taken along the line XII-XII in Fig. 7;
- Fig. 13: is a cross-sectional view taken along the line XIII-XIII in Fig. 7;
- Fig. 14: is a cross-sectional view taken along the line XIV-XIV in Fig. 6; and
- Fig. 15: is a cross-sectional view taken along the line XV-XV in Fig. 6;

Description will be hereinafter made of a preferred embodiment of a rear frame of a motorcycle and a method for casting a rear frame of a motorcycle.

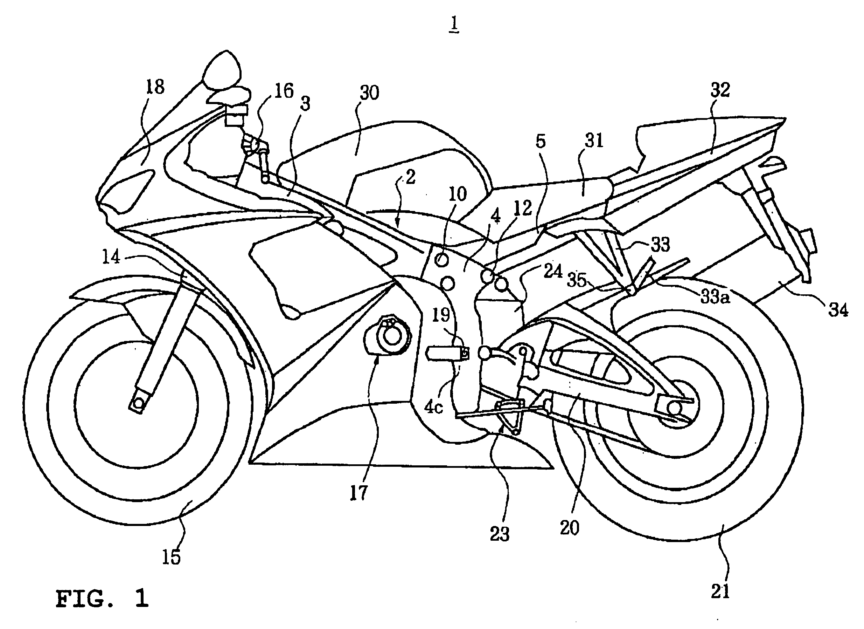

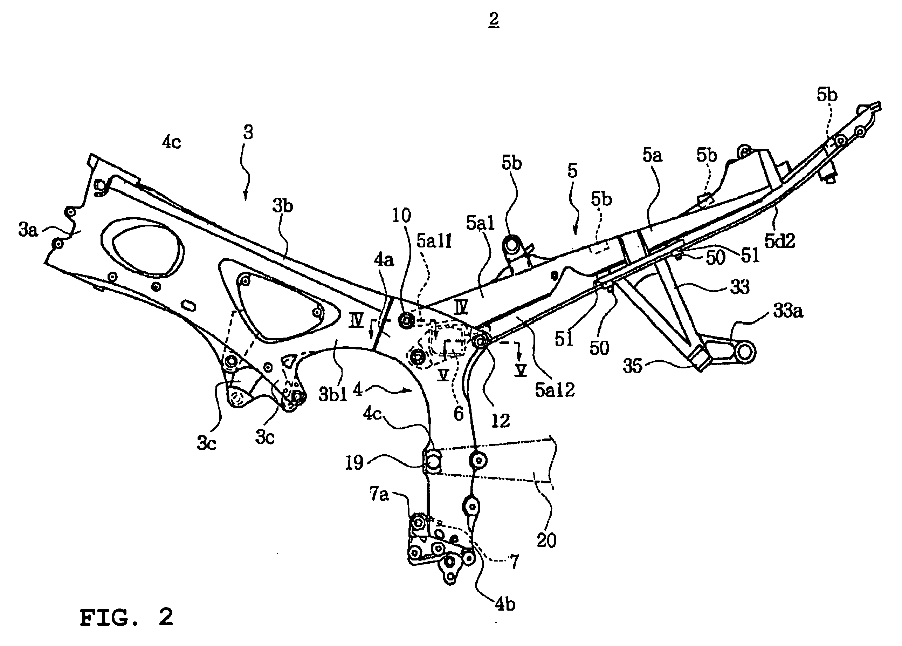

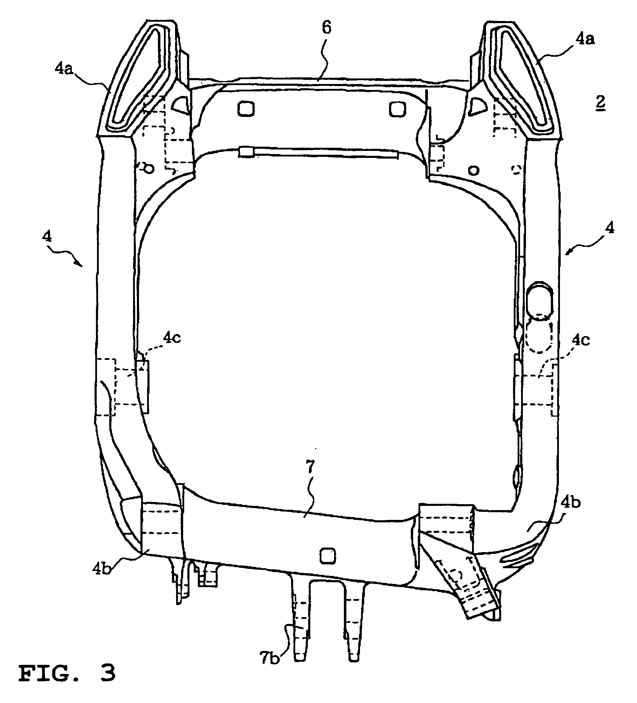

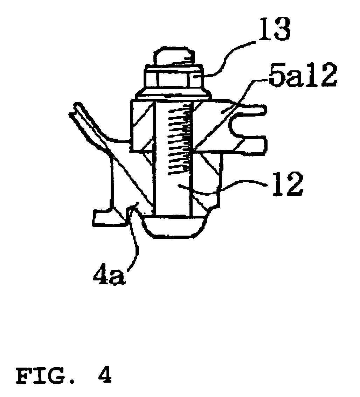

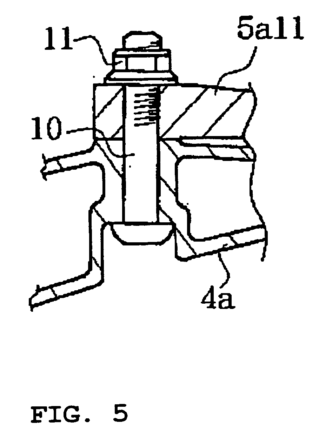

Fig. 1 is a side view of a motorcycle using a rear frame, Fig. 2 is a side view of a body frame, Fig. 3 is a side view of the body frame before the rear frame is assembled, Fig. 4 is a cross-sectional view taken along the line IV-IV in Fig. 2, and Fig. 5 is a cross-sectional view taken along the line V-V in Fig. 2.

A motorcycle 1 of this embodiment has a body frame 2 constituted of a main frame 3, rear arm brackets 4, and a rear frame 5. The main frame 3 and the rear arm brackets 4 are made by casting and the rear frame 5 is made by die-casting.

The main frame 3 has a head pipe part 3a at the front side, and frame parts 3b extending backward from the right and left of the head pipe part 3a and each having a rear part 3b1, to which an upper part 4a of the rear arm bracket 4 is joined by welding. The paired right and left rear arm brackets 4 have upper parts 4a connected by an upper cross member 6, and lower parts 4b connected by a lower cross member 7.

The rear frame 5 is of a longitudinally elongated shape and has a pair of right and left rail parts 5a connected by a plurality of cross members 5b. Each of the paired right and left rail parts 5a has a front part 5a1 having an upper joint part 5a11, which is secured to the upper part 4a of the rear arm bracket 4 by a bolt 10 and a nut 11, and a lower joint part 5a12, which is secured to the upper part 4a of the rear arm bracket 4 by a bolt 12 and a nut 13.

A front fork 14 is rotatably supported by the head pipe part 3a of the main frame 3. A front wheel 15 is provided at a lower part of the front fork 14, and a handle bar 16 is provided on the front fork 14. The main frame 3 has mounting brackets 3c, and the lower cross member 7 has a mounting bracket 7a. An engine 17 is suspended from the mounting brackets 3c and the mounting bracket 7a. A front cowling 18 extends from a front part of the motorcycle 1 and covers both sides of the engine 17.

Each of the rear arm brackets 4 has a pivot mounting part 4c, and a front part of a rear arm 20 is pivotally supported by a pivot shaft 19 attached to the pivot mounting parts 4c. A rear wheel 21 is supported at a rear part of the rear arm 20. The rear arm 20 is supported by a link mounting part 7b of the lower cross member 7 via a link mechanism 23. A rear cushion 24 is provided between the link mechanism 23 and the upper cross member 6 and the rear arm 20 can be swung vertically about the pivot shaft 19.

A fuel tank 30 is located on the main frame 3 and the rear arm brackets 4, and a seat 31 is disposed in the rear of the fuel tank 30 and on a front part of the rear frame 5. A rear cowling 32 covers a rear part of the rear frame 5. Tandem foot rest mounting brackets 33 are attached to the rear frame 5, and tandem foot rests 35 are attached to the tandem foot rest mounting brackets 33. One of the tandem foot rest mounting brackets 33 has a muffler attaching part 33a, and a muffler 34 is supported by the muffler attaching part 33a.

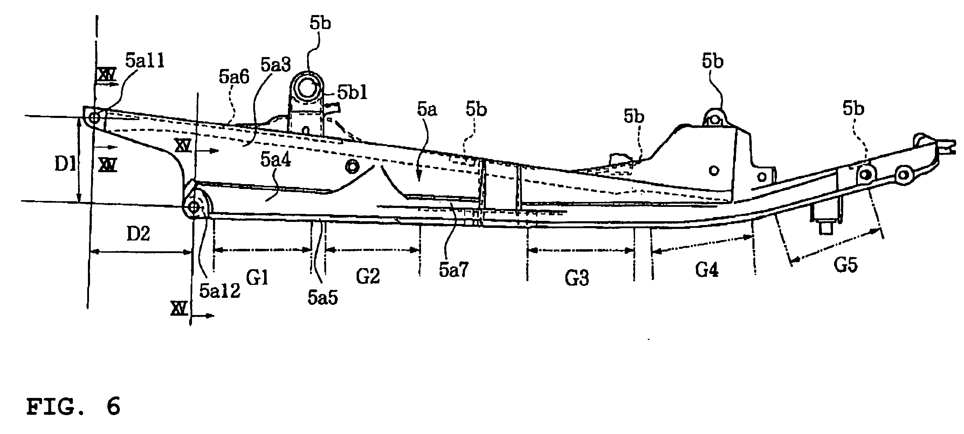

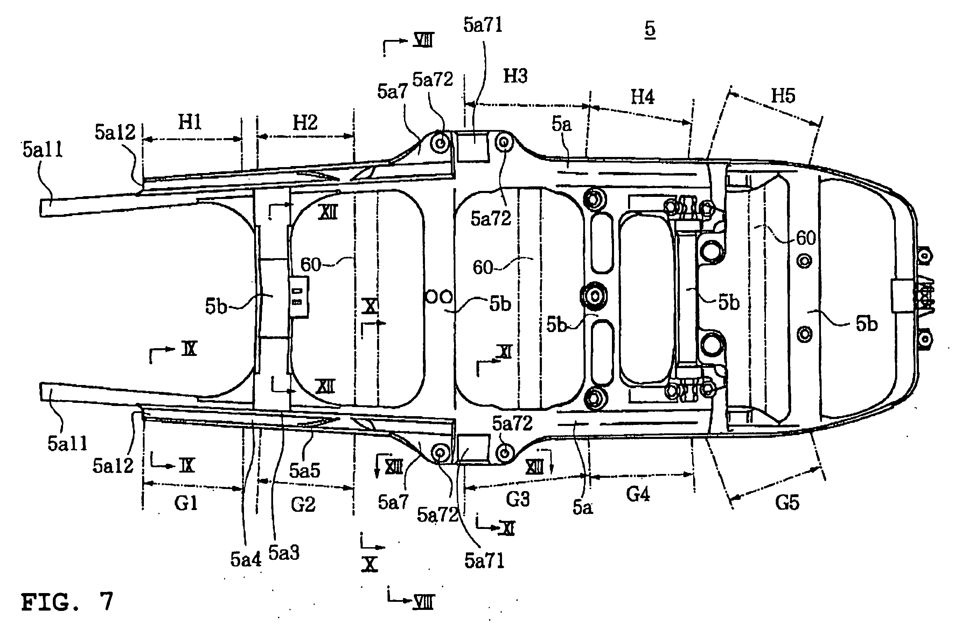

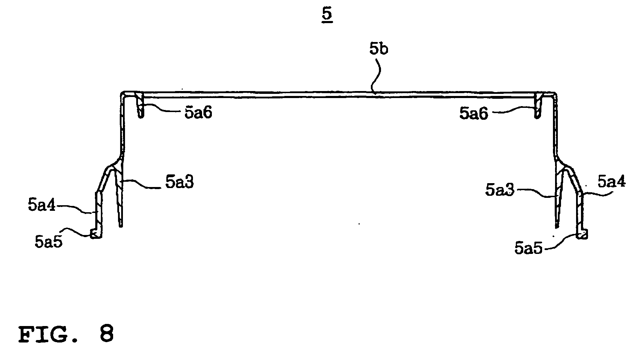

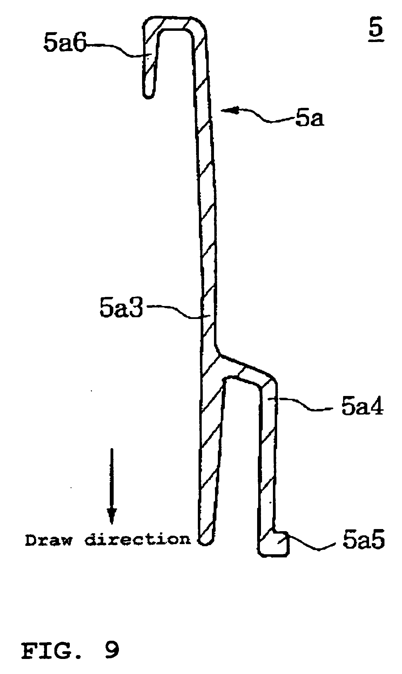

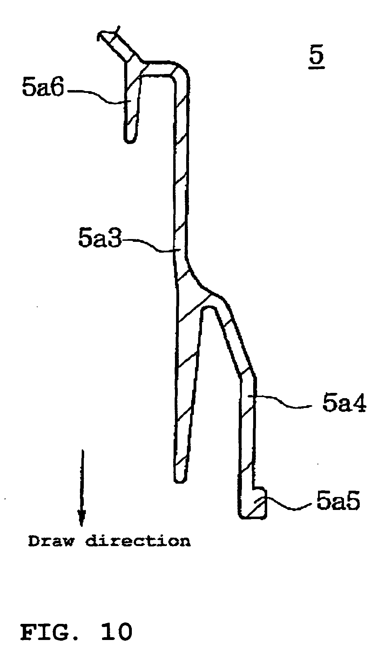

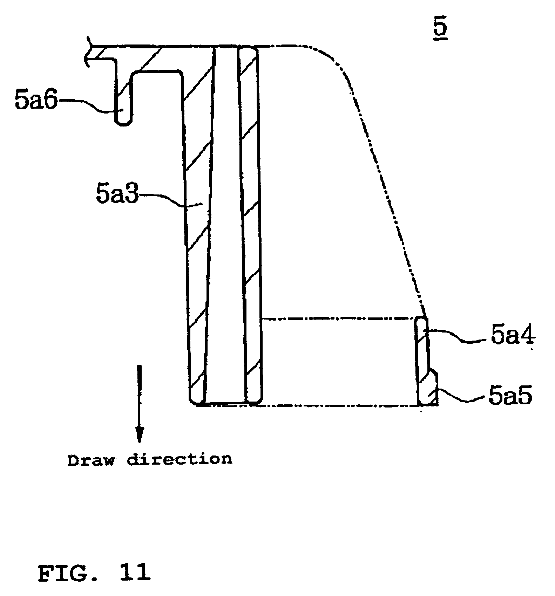

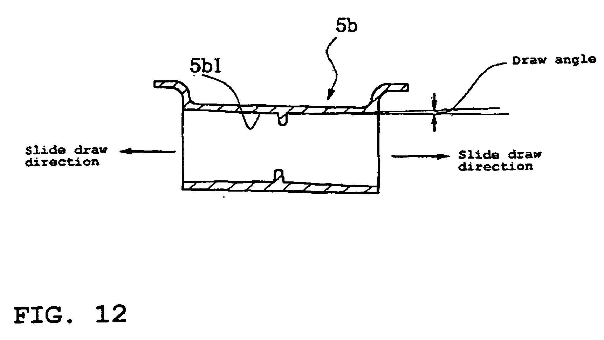

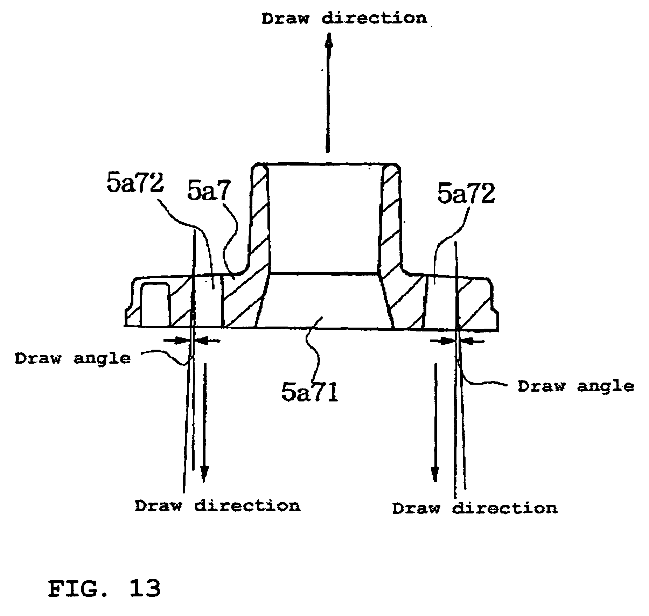

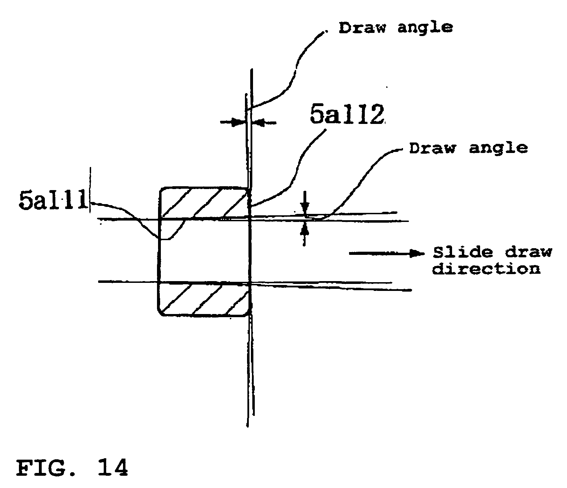

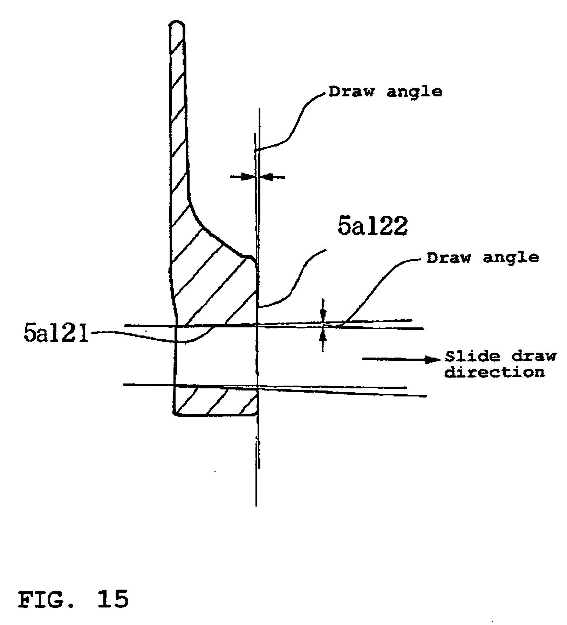

The rear frame 5 of the motorcycle 1 will be described with reference to Figs. 6 to 15. Fig. 6 is a side view of the rear frame, Fig. 7 is a plan view of the rear frame, Fig. 8 is a cross-sectional view taken along the line VIII-VIII in Fig. 7, Fig. 9 is a cross-sectional view taken along the line IX-IX in Fig. 7, Fig. 10 is a cross-sectional view taken along the line X-X in Fig. 7, Fig. 11 is a cross-sectional view taken along the line XI-XI in Fig. 7, Fig. 12 is a cross-sectional view taken along the line XII-XII in Fig. 7, Fig. 13 is a cross-sectional view taken along the line XIII-XIII in Fig. 7, Fig. 14 is a cross-sectional view taken along the line XIV-XIV in Fig. 6, and Fig. 15 is a cross-sectional view taken along the line XV-XV in Fig. 6.

The rear frame 5 of the motorcycle 1 of this embodiment, which is produced by die-casting with a die which can be separated vertically and partially with slide dies slidable laterally outward, is of a longitudinally elongated shape and has a pair of right and left rail parts 5a connected by a plurality of cross members 5b. The cross members 5b connects the upper edges of the rail parts 5a so that the paired right and left rail parts 5a and the cross members 5b can form a U-shape which opens downward in a cross-section perpendicular to the longitudinal direction of the vehicle as shown in Fig. 8.

In the die-casting of this embodiment, a plurality of gate parts G1 to G5 for molten metal are located separately along the lower edge of one of the rail parts 5a, two on the front side and three on the rear side, and molten metal pools H1 to H5 are located separately along the lower edge of the other rail part 5a, two on the front side and three on the rear side, as shown in Figs. 6 and 7. The plurality of gate parts G1 to G5 for molten metal and the molten metal pools H1 to H5 are longitudinally elongated to ensure smooth flow of the molten metal and prevent local temperature variations. Also, the gate parts G1 to G5 and the molten metal pool H1 to H5 are located separately, two on the front side and three on the rear side, and not located at a center part, not to impair the strength of the die.

Runners 60 are provided between the right and left rail parts 5a to connect them in addition to the cross members 5b, which are necessary to the final product. The runners 60 are cut off after the formation of the rear frame 5.

The poured molten metal is uniformly distributed from the plurality of gate parts G1 to G6 in one of the rail part 5a and then rises in every part of the other rail part 5a with its front surfaces kept uniform. In this case, even when the front surfaces of the molten metal are disturbed by changes in pressure balance or the like, the front surfaces of the molten metal are automatically kept at the same level because of the first rail part 5a communicated to the other rail part 5a.

When a predetermined period of time has passed after the completion of the pouring of the molten metal and the molten metal is solidified completely, the die is separated into a number of, preferably, two parts to take out the casting product. When the plurality of gate parts G1 to G6, the runners 60, and the molten metal pool H1 to H6 are removed from the casting product, the formation of the rear frame 5 is completed.

In forming the rear frame 5, which is of a longitudinally elongated shape, by die-casting, when a gate part is provided in the vicinity of the front or rear end of the rear frame 5, the molten metal tends to be cooled on the way as it gets thinner. However, a plurality of gate parts G1 to G6 for pouring the molten metal through are located separately along the lower edge of the rail part 5a, the metal pouring process can be shortened and casting defects such as underfills can be prevented.

The cross members 5b connects the upper edges of the rail parts 5a so that the paired right and left rail parts 5a and the cross members 5b can form a U-shape which opens downward in a cross-section perpendicular to the longitudinal direction of the vehicle as shown in Fig. 8.

In the above constitution, the plurality of gate parts G1 to G6 are provided along one of the rail parts 5a and the molten metal pools H1 to H6 are located separately along the lower edge of the other rail part 5a. Since the molten metal pools H1 to H6 are located separately along the longitudinal direction, the configuration can be simplest and the die can be simple in structure.

Each of the rail parts 5a has a base thick part 5a3 extending from the lower edge thereof, an extended part 5a4 extending outward from a lower part of the base thick part 5a3 and then downward, and an edge part 5a5 extending outward from the lower end of the extended part 5a4 and having a thickness greater than that of the base thick part 5a3 as shown in Figs. 6. and 9 through 11. The upper edge of each rail part 5a is bent inward to form a bent part 5a6. At the lower edge of each rail part 5a, the extended part 5a4 and the edge part 5a5 form a rib structure. At the upper edge of the each rail part 5a, the bent part 5a6 forms a rib structure. Thus, the rail parts 5a are light in weight and have rigidity.

The cross member 5b located on the side of the fuel tank 30 supports the fuel tank 30. The cross member 5b for supporting the fuel tank 30 has a damper attaching hole 5b1 having a circular shape as shown in Fig. 12 to prevent scuffing between slide pins of the die and the casting product.

Each of the rail parts 5a has a tandem foot rest mounting bracket attaching part 5a7. Each of the tandem foot rest mounting bracket attaching parts 5a7 extends outward from the lower edge of the corresponding rail part 5a as shown in Fig. 6, 7 and 13, and has a lightning hole 5a71 at the center and attaching holes 5a72 in front and rear of the lightning hole 5a71. The attaching holes 5a72 is aligned with the die draw direction (generally vertical, slightly inclined forward) to eliminate the necessity of sliding dies in die-casting and simplify the die.

As shown in Fig. 2, the tandem foot rest mounting brackets 33 are attached to the tandem foot rest mounting bracket attaching parts 5a7 by bolts 50 inserted into the attaching holes 5a72 and nuts 51 threaded on the bolts 50.

The upper joint parts 5a11 and lower joint parts 5a12 of the rail parts 5a are formed on the main frame side of the rear frame 5 as shown in Figs. 14 and 15 and provided at two locations on the rail parts 5a; however, the present invention is not limited thereto. The number of the upper joint parts 5a11 and the lower joint parts 5a12 is not specifically limited as long as it is two or more. The upper joint parts 5a11 and lower joint parts 5a12 are formed in such a manner that the distance D2 between the upper joint parts 5a11 located on the front side and lower joint parts 5a12 located on the rear side in a direction perpendicular to the die draw direction is greater than the distance D1 between the upper joint parts 5a11 located on the upper side and the lower joint parts 5a12 located on the lower side in the die draw direction as shown in Fig. 6.

When three or more joint parts are provided, the distance between the joint parts located at the most front position and the joint parts located at the most rear position in a direction perpendicular to the dir draw direction is greater than the distance between the joint parts located at the highest position and the joint parts located at the lowest position in the die draw direction. Since the load applied to the rear frame 5 can be supported by the wide span in the longitudinal direction of the vehicle, the depth of the die can be small. Thus, the die can be small and the formation of the rear frame 5 can be facilitated.

Since only hole parts 5a111 and 5a121 of the upper joint parts 5a11 and lower joint parts 5a12 are formed with slide dies as shown in Figs 14 and 15, the slide dies can be small and simple.

The upper joint parts 5a11 and lower joint parts 5a12 have an outer surface 5a112 and 5a122, respectively, having draw angles in the vertical direction. However, the draw angles are smaller than those of (most of) other parts and can minimize defects when the rear frame 5 is secured to the main frame 3.

As has been described above, since the rear frame, which is of a longitudinally elongated shape and having a pair of right and left rail parts connected by a plurality of cross members, is formed by die-casting, the molten metal tends to be cooled on the way as it gets thinner. However, since a plurality of gate parts to pour the molten metal through are located separately along the rail parts, the metal pouring process can be shortened and casting defects such as underfills can be prevented.

As explained, the present invention provides a rear frame of a motorcycle which has a shortened metal pouring process and is free from casting defects such as underfills.

According to an embodiment, a rear frame of a vehicle such as a motorcycle is of a longitudinally elongated shape and provided with a pair of right and left rail parts connected by a plurality of cross members. Therein, the rear frame is formed by die-casting and a plurality of gate parts to pour molten metal through are located separately along the rail parts. Since the rear frame, which is of a longitudinally elongated shape and provided with a pair of right and left rail parts connected by a plurality of cross members, is formed by die-casting, the molten metal tends to be cooled on the way as it gets thinner. However, since a plurality of gate parts to pour the molten metal through are located separately along the rail parts, the metal pouring process can be shortened and casting defects such as underfills can be prevented.

The plurality of gate parts are provided along one of the rail parts and molten metal pools are located separately along the other rail part. Since the plurality of gate parts are provided along one of the rail parts and molten metal pools are located separately along the other rail part, the above effect can be obtained with the simplest configuration using a die which is simple in structure.

Further, preferably, the cross members connects upper edges of the rail parts so that the paired right and left rail parts and the cross members can form a U-shape which opens downward in a cross-section perpendicular to the longitudinal direction of the vehicle. Since the paired right and left rail parts and the cross members form a U-shape which opens downward in a cross-section perpendicular to the longitudinal direction of the vehicle, the rear frame has structure that is light in weight and has strength.

Moreover, preferably each of the rail parts has a gate part at a lower edge thereof and an edge part extending outward from the gate part and having a thickness greater than that of a base thick part. Since each of the rail parts has a gate part at a lower edge thereof and an edge part extending outward from the gate part and having a thickness greater than that of a base thick part, and since the gate parts are provided at the lower edges of the rail parts, the gate parts can be easily removed to get a final product and does not cause casting defects such as underfills.

Another aspect of the present invention combinable with the previous first aspect is a rear frame of a motorcycle which is of a longitudinally elongated shape and provided with a pair of right and left rail parts connected by a plurality of cross members, the cross members connecting upper edged of the rail parts so that the paired right and left rail parts and the cross members can form a U-shape which opens downward in a cross-section perpendicular to the longitudinal direction of the vehicle.

The rear frame is formed by die-casting and each of the rail parts has at least two joint parts to be secured to a main frame, and that the distance between the joint part located at the most front position and the joint part located at the most rear position in a direction perpendicular to the die draw direction is greater than the distance between the joint part located at the highest position and the joint part located at the lowest position in the die draw direction. Since the load applied to the rear frame can be supported by the wide span in the longitudinal direction of the vehicle, the depth of the die can be small. Thus, the die can be small and the formation of the rear frame can be facilitated.

Another aspect of the present invention is a casting method for forming a rear frame of a vehicle such as a motorcycle which is of a longitudinally elongated shape and has a pair of right and left rail parts connected by a plurality of cross members by die-casting.

A plurality of gate parts to pour molten metal through are located separately along the rail parts. Since the rear frame, which is of a longitudinally elongated shape and having a pair of right and left rail parts connected by a plurality of cross members, is formed by die-casting, the molten metal tends to be cooled on the way as it gets thinner. However, since a plurality of gate parts to pour the molten metal through are located separately along the rail parts, the metal pouring process can be shortened and casting defects such as underfills can be prevented.

The plurality of gate parts are provided along one of the rail parts and molten metal pools are located separately along the other rail part. Since the plurality of gate parts are provided along one of the rail parts and molten metal pools are located separately along the other rail part, the rear frame can be formed by die-casting with the simplest configuration using a die which is simple in structure.

As is clear from the above description, an embodiment of the present inventon is a rear frame for a motorcycle which is of a longitudinally elongated shape and provided with a pair of right and left rail parts connected by a plurality of cross members, wherein the rear frame is formed by die-casting and a plurality of gate parts to pour molten metal through are located separately along the rail parts, and each of the rail parts has an edge part extending outward therefrom and having a thickness greater than that of a base thick part and the gate parts are provided along the rail parts.

In such a rear frame of a motorcycle, the plurality of gate parts are provided along one of the rail parts and molten metal pools are located separately along the other rail part.

Preferably, the cross members connects upper edges of the rail parts so that the paired right and left rail parts and the cross members can form a U-shape which opens downward in a cross-section perpendicular to the longitudinal direction of the vehicle.

More preferably, the edge parts are located at lower edges of the rail parts.

Additionally or alternatively an inventive rear frame of a motorcycle is disclosed which is of a longitudinally elongated shape and provided with a pair of right and left rail parts connected by a plurality of cross members, the cross members connecting upper edged of the rail parts so that the paired right and left rail parts and the cross members can form a U-shape which opens downward in a cross-section perpendicular to the longitudinal direction of the vehicle, wherein the rear frame is formed by die-casting and each of the rail parts has at least two joint parts to be secured to a main frame, and the distance between the joint part located at the most front position and the joint part located at the most rear position in a direction perpendicular to the die draw direction is greater than the distance between the joint part located at the highest position and the joint part located at the lowest position in the die draw direction.

Besides, a casting method for forming a rear frame of a motorcycle is disclosed which is of a longitudinally elongated shape and provided with a pair of right and left rail parts connected by a plurality of cross members by die-casting, wherein a plurality of gate parts to pour molten metal through are located separately along the rail parts, and each of the rail parts has an edge part extending outward therefrom and having a thickness greater than that of a base thick part and the gate parts are provided along the rail parts.

Such a casting method for forming a rear frame of a motorcycle preferably has the plurality of gate parts provided along one of the rail parts and molten metal pools are located separately along the other rail part.

As described above, the molten material pouring direction is substantially cross wise, in particular substantially vertical to a longitudinal direction of the rear frame. Accordingly, a rear frame 5 of a motorcycle 1 can be produced which is of a longitudinally elongated shape and provided with a pair of right and left rail parts 5a connected by a plurality of cross members 5b. The rear frame 5 is formed by die-casting and a plurality of gate parts G1 to G5 to pour the molten metal through are located separately along the rail parts 5a. It is possible to shorten the metal pouring process and prevent casting defects such as underfills.

## Claims

1. Casting method for forming a rear frame (5) of a motorcycle, the frame (5) being of a longitudinally elongated shape and being provided with a pair of right and left rail parts (5a,5a) connected by a plurality of cross members (5b,5b), by die-casting, **characterized in that** a plurality of gate parts (G1 to G5) for pouring molten metal through are provided separately along one of the rail parts (5a) and a plurality of molten metal pools (H1 to H5) are located separately along the other rail part (5a), wherein a molten material pouring direction is oriented from one of the rail parts (5a) to the other of the rail parts (5a), crosswise and/or vertical to a longitudinal direction of the rear frame (5), an arrangement of the gate parts (G1 to G5) at one of the rail parts (5a) along a longitudinal direction of the rear frame (5) corresponds to an arrangement of molten metal pools (H1 to H5) at another one of the rail parts (5a), the size and/or location of the gate parts (G1 to G5) and of the molten metal pools (H1 to H5) at a border area to the rail parts (5a,5a) is symmetrical to a virtual center plane provided centrically between the rail parts (5a,5a).

2. Casting method according to claim 1, **characterized in that** a primary die-draw direction is substantially vertical to a longitudinal direction of the rear frame (5), and/or **in that** a secondary die-draw direction is substantially vertical to the longitudinal direction of the rear frame (5), and/or vertical to the primary die-draw direction.

3. Casting method according to claim 1 or 2, **characterized in that** the rear frame (5) is substantially U-shaped in cross-section, wherein a first die is movable relative to a second die in a primary die-draw direction to form the rail parts (5a, 5a), the cross members (5b, 5b), runner portions (60), and/or a plurality of longitudinally extending rib parts (5a3, 5a4, 5a5, 5a6) therebetween.

4. Casting method according to at least one of the claims 1 to 3, **characterized in that** secondary die portions being slidable in a secondary die-draw direction relative to first and second main dies are provided for forming a damper attaching hole (5b1), a joint hole (5a111, 5a121) and/or a bracket attaching hole (5a72).

5. Rear frame for a motorcycle, wherein the rear frame has a longitudinally elongated shape and is provided with a pair of right and left rail parts (5a, 5a) connected by a plurality of cross members (5b, 5b), **characterized in that** the rear frame is formed by die-casting by use of a casting method according to at least one of the claims 1 to 4, wherein frame portions are provided which corresponds to plurality of gate parts (G1 to G5) for pouring molten metal through, which are located separately along one of the rail parts (5a) and a plurality of molten metal pools (H1 to H5) are located separately along the other rail part (5a):

6. Rear frame according to claim 5, **characterized in that** in a casting state of the rear frame a plurality of runners (60) are provided connecting the rail parts (5a, 5a).

7. Rear frame according to claim 5 or 6, **characterized in that** the rail parts (5a, 5a) are connected to one another at a first end thereof, preferably a rear end of the rear frame (5) and/or **in that** the rail parts (5a, 5a) are provided with connecting portions, preferably comprising upper joint parts (5a11) and/or lower joint parts (5a12), at another end thereof, preferably being a front end of the rear frame (5).

8. Rear frame according to at least one of the claims 5 to 7, **characterized by** at least one cross member (5b) being provided with a preferably die-cast, preferably circular damper attaching hole (5b1) extending along a direction of the cross member (5b), in particular vertically to a longitudinal direction of the rear frame (5).

9. Rear frame according to at least one of the claims 5 to 8, **characterized in that** outer surfaces (5a112, 5a122) of joint parts (5a11, 5a12) of the rail parts (5a, 5a) are provided with preferably die-cast joint hole parts (5a111, 5a121) extending in a direction substantially vertical to a longitudinal direction of the rear frame (5) and/or horizontally in an inbuilt state of the rear frame (5).

10. Rear frame according to at least one of the claims 5 to 9, **characterized in that** the rail parts (5a, 5a) are provided with unitarily formed rib elements (5a3, 5a4, 5a5, 5a6) extending along a longitudinal direction of the rail parts (5a, 5a) at upper and/or lower edges thereof.

11. Rear frame according to claim 10, **characterized in that** the rail parts (5a, 5a) comprise a first rib, preferably being an upper rib (5a6), extending inwardly and/or a second rib, preferably being a lower rib (5a5), extending outwardly of the rear frame (5) if seen in a cross-sectional view along a longitudinal direction of the rear frame (5).

12. Rear frame according to at least one of the claims 5 to 11, **characterized in that** cross members (5b, 5b) connect upper edges of the rail parts (5a, 5a) so that the paired right and left rail parts (5a, 5a) and **in that** the cross members (5b, 5b) form a U-shape which opens downward in a cross-section perpendicular to a longitudinal direction of the vehicle (1) in a mounted state of the rear frame.

13. Rear frame according to at least one of the claims 5 to 12, **characterized in that** each of the rail parts (5a, 5a) has a gate part (G1 to G5) at a lower edge thereof and an edge part (5a5) extending outward from the gate part (G1 to G5) and having a thickness greater than that of a base thick part (5a3).

14. Rear frame according to at least one of the claims 5 to 13, **characterized in that** a first distance (D2) between a joint part (5a11) located closest to a most front position and a joint part (5a12) located closest to a most rear position in a direction perpendicular to a die draw direction is greater than a second distance (D1) between a joint part (5a11) located closest to a highest position and a joint part (5a12) located closest to a lowest position in the die draw direction.

## Patentansprüche

1. Gießverfahren zum Formen eines hinteren Rahmens (5) eines Motorrads, der Rahmen (5) ist von einer längsgestreckten Form und mit einem Paar von rechten und linken Holmteilen (5a, 5a) vorgesehen, die mit einer Mehrzahl von Querelementen (5b, 5b) durch Kokillenguss, verbunden sind, **dadurch gekennzeichnet, dass** eine Mehrzahl von Anguss-Teilen (G1 bis G5) zum Durch-Vergießen von Metall-Schmelze getrennt entlang einem der Holmteile (5a) vorgesehen sind und eine Mehrzahl von Metall-Schmelze-Reservoire (H1 bis H5) getrennt entlang dem anderen Holmteil (5a) angeordnet sind, wobei die Schmelz-Material-Vergieß-Richtung von einem der Holmteile (5a) zu dem anderen der Holmteile (5a) orientiert ist, quer und/oder vertikal zu einer Längs-Richtung des hinteren Rahmens (5), eine Anordnung derAnguss-Teile (G1 bis G5) an einem der Holmteile (5a), entlang einer Längs-Richtung des hinteren Rahmens (5), entspricht einer Anordnung der Metall-Schmelze-Reservoire (H1 bis H5) an dem anderen der Holmteile (5a), die Größe und/oder Anordnung der Anguss-Teile (G1 bis G5) und die Metall-Schmelze-Reservoire (H1 bis H5) an einem Grenzbereich zu den Holmteilen (5a, 5a) ist symmetrisch zu einer virtuellen Mittenebene, vorgesehen mittig zwischen den Holmteilen (5a, 5a).

2. Gießverfahren gemäß Anspruch 1, **dadurch gekennzeichnet, dass** eine primäre Form-Zieh-Richtung im Wesentlichen vertikal zu einer Längs-Richtung des hinteren Rahmens (5) ist, und/oder dass eine sekundäre Form-Zieh-Richtung im Wesentlichen vertikal zu der Längs-Richtung des hinteren Rahmens (5) ist, und/oder vertikal zu der primären Form-Zieh-Richtung ist.

3. Gießverfahren gemäß Anspruch 1 oder 2, **dadurch gekennzeichnet, dass** der hintere Rahmen (5) im Wesentlichen U-förmig im Querschnitt ist, wobei eine erste Form bewegbar relativ zu einer zweiten Form in der primären Form-Zieh-Richtung ist, um die Holmteile (5a, 5a), die Querelemente (5b, 5b), Angussabschnitte (60), und/oder eine Mehrzahl von längserstreckenden Rippenteilen (5a3, 5a4, 5a5, 5a6) dazwischen zu bilden.

4. Gießverfahren gemäß zumindest einem der Ansprüche 1 bis 3, **dadurch gekennzeichnet, dass** sekundäre Formabschnitte, die gleitbar in eine sekundäre Form-Zieh-Richtung relativ zu ersten und zweiten Hauptformen sind, zum Ausbilden eines Dämpfer-Anbringungslochs (5b1), eines Verbindungslochs (5a111, 5a121) und/oder ein Klammer-Anbringungsloch (5a72) vorgesehen sind.

5. Hinterer Rahmen für ein Motorrad, wobei der hintere Rahmen eine längsgestreckte Form hat und mit einem Paar von rechten und linken Holmteilen (5a, 5b), verbunden mit einer Mehrzahl von Querelementen (5b, 5b), vorgesehen ist, **dadurch gekennzeichnet, dass** der hintere Rahmen durch Kokillenguss unter Verwendung eines Gießverfahrens nach zumindest einem der Ansprüche 1 bis 4 ausgebildet ist, wobei Rahmenabschnitte vorgesehen sind, die einer Mehrzahl von Anguss-Teilen (G1 bis G5) zum Vergießen von Metall-Schmelze durch diese, vorgesehen sind, die getrennt entlang einem der Holmteile (5a) angeordnet sind und eine Mehrzahl von Metall-Schmelze-Reservoire (H1 bis H5) getrennt entlang dem anderen Holmteil (5a) positioniert sind.

6. Hinterer Rahmen gemäß Anspruch 5, **dadurch gekennzeichnet, dass** in einem Gieß-Zustand des hinteren Rahmens eine Mehrzahl von Angüssen (60) vorgesehen sind, welche die Holmteile (5a, 5a) verbinden.

7. Hinterer Rahmen gemäß Anspruch 5 oder 6, **dadurch gekennzeichnet, dass** die Holmteile (5a, 5a) miteinander an einem ersten Ende derselben verbunden sind, vorzugsweise einem hinteren Ende des hinteren Rahmens (5), und/oder dass die Holmteile (5a, 5a) mit Verbindungsabschnitten vorgesehen sind, vorzugsweise obere Verbindungsteile (5a11) und/oder untere Verbindungsteile (5a12) an einem anderen Ende derselben, vorzugsweise einem vorderen Ende des hinteren Rahmens (5).

8. Hinterer Rahmen gemäß zumindest einem der Ansprüche 5 bis 7, **gekennzeichnet durch** zumindest einem Querelement (5b), das bevorzugte mit Kokillenguss vorgesehen ist, vorzugsweise mit einem kreisförmigen Dämpfer-Anbringungsloch (5b1), das sich entlang einer Richtung des Querelements (5b) erstreckt, in bevorzugter Weise vertikal zu einer Längs-Richtung des hinteren Rahmens (5).

9. Hinterer Rahmen gemäß zumindest einem der Ansprüche 5 bis 8, **dadurch gekennzeichnet, dass** äußere Flächen (5a112, 5a122) von Verbindungsteilen (5a11, 5a12) der Holmteile (5a, 5a) bevorzugten mit Kokillenguss-Verbindungslochteilen (5a111, 5a121) vorgesehen sind, die sich in eine Richtung im Wesentlichen vertikal zu einer Längs-Richtung des hinteren Rahmens (5) und/oder horizontal in einem eingebauten Zustand des hinteren Rahmens (5) erstrecken.

10. Hinterer Rahmen gemäß zumindest einem der Ansprüche 5 bis 9, **dadurch gekennzeichnet, dass** die Holmteile (5a, 5a) mit gleichförmig geformten Rippenelementen (5a3, 5a4,5a5, 5a6) vorgesehen sind, die sich entlang einer Längs-Richtung der Holmteile (5a, 5a) an oberen und/oder unteren Kanten derselben erstrecken.

11. Hinterer Rahmen gemäß Anspruch 10, **dadurch gekennzeichnet, dass** die Holmteile (5a, 5a) eine erste Rippe, die bevorzugt eine obere Rippe (5a6) ist, die sich nach innen erstreckt und/oder eine zweite Rippe, die in bevorzugter Weise eine untere Rippe (5a5) ist, die sich nach außen von dem hinteren Rahmen (5) erstreckt, wenn in einer Querschnittsansicht entlang einer Längs-Richtung des hinteren Rahmens gesehen, umfasst.

12. Hinterer Rahmen gemäß zumindest einem der Ansprüche 5 bis 11, **dadurch gekennzeichnet, dass** Querelemente (5b, 5b) obere Kanten der Holmteile (5a, 5a) verbinden, sodass die gepaarten rechten und linken Holmteile (5a, 5a) und dass die Querelemente (5b, 5b) eine U-Form bilden, die sich nach unten in einen Querschnitt senkrecht zu einer Längs-Richtung des Fahrzeugs (1), in einem montierten Zustand des hinteren Rahmens, öffnet.

13. Hinterer Rahmen gemäß zumindest einem der Ansprüche 5 bis 12, **dadurch gekennzeichnet, dass** jeder der Holmteile (5a, 5a) hat einen Anguss-Teil (G1 bis G5) an einer unteren Kante derselben und einen Kanten-Teil (5a5), der sich nach außen von dem Anguss-Teil (G1 bis G5) erstreckt und eine Dicke größer als die eines Basisdickenteils (5a3) hat.

14. Hinterer Rahmen gemäß zumindest einem der Ansprüche 5 bis 13, **dadurch gekennzeichnet, dass** ein erster Abstand (D2) zwischen einem Verbindungsteil (5a11), angeordnet am nächsten zu einer am weitesten vorne gelegenen Position, und einem Verbindungsteil (5a12), angeordnet am nächsten zu einer am meisten hinten gelegenen Position, in einer Richtung senkrecht zu der Form-Zieh-Richtung, größer ist als ein zweiter Abstand (D1) zwischen einem Verbindungsteil (5a11), angeordnet am nächsten zu einer höchsten Position, und einem Verbindungsteil (5a12), angeordnet am nächsten zu einer untersten Position in der Form-Zieh-Richtung.

## Revendications

1. Procédé de coulage pour former le cadre arrière (5) d'une motocyclette, le cadre (5) étant d'une forme longitudinalement allongée et étant muni d'une paire de parties de rail droit et gauche (5a, 5a) reliés par une pluralité d'éléments transversaux (5b, 5b), par coulée sous pression, **caractérisé en ce qu'**une pluralité de parties d'entrée (G1 à G5) pour verser un métal fondu à travers sont disposées séparément sur une des parties de rail (5a) et une pluralité de bassins de métal fondu (H1 à H5) sont disposés séparément sur l'autre partie de rail (5a), dans lequel le sens de versement de matière fondue est orienté de l'une des parties de rail (5a) à l'autre des parties de rail (5a), transversalement et/ou verticalement par rapport à la direction longitudinale du cadre arrière (5),
un agencement des parties d'entrée (G1 à G5) au niveau d'une des parties de rail (5a) dans la direction longitudinale du cadre arrière (5) correspond à un agencement des bassins de métal fondu (H1 à H5) au niveau d'une autre des parties de rail (5a), les dimensions et/ou l'emplacement des parties d'entrée (G1 à G5) et des bassins de métal fondu (H1 à H5) au niveau d'une zone limite des parties de rail (5a, 5a) est/sont symétrique(s) par rapport à un plan central virtuel disposé de manière centrée entre les parties de rail (5a, 5a).

2. Procédé de coulage selon la revendication 1, **caractérisé en ce que** la direction d'extraction de coulée primaire est sensiblement verticale par rapport à la direction longitudinale du cadre arrière (5), et/ou en ce que la direction d'extraction de coulée secondaire est sensiblement verticale par rapport à la direction longitudinale du cadre arrière (5) et/ou verticale par rapport à la direction d'extraction de coulée primaire.

3. Procédé de coulage selon la revendication 1 ou 2, **caractérisé en ce que** le cadre arrière (5) est sensiblement en forme de U en coupe, dans lequel une première matrice est mobile par rapport à une seconde matrice dans la direction d'extraction de coulée primaire pour former les parties de rail (5a, 5a), les éléments transversaux (5b, 5b), les parties de canal d'alimentation (60) et/ou une pluralité de parties de nervure s'étendant longitudinalement (5a3, 5a4, 5a5, 5a6) entre elles.

4. Procédé de coulage selon au moins une des revendications 1 à 3, **caractérisé en ce que** les parties de matrice secondaire pouvant coulisser dans une direction d'extraction de coulée secondaire par rapport aux première et seconde matrices principales sont prévues pour former un trou de fixation d'amortisseur (5b1), un trou de jonction (5a111, 5a121) et/ou un trou de fixation de support (5a72).

5. Cadre arrière pour une motocyclette, dans lequel le cadre arrière possède une forme longitudinalement allongée et est muni d'une paire de parties de rail droite et gauche (5a, 5a) reliées par une pluralité d'éléments transversaux (5b, 5b), **caractérisé en ce que** le cadre arrière est formé par coulée sous pression en utilisant un procédé de coulée selon au moins une des revendications 1 à 4, dans lequel des parties de cadre sont prévues qui correspondent à un pluralité de parties d'entrée (G1 à G5) pour verser un métal fondu à travers, qui sont disposées séparément sur une des parties de rail (5a) et une pluralité de bassins de métal fondu (H1 à H5) sont disposés séparément sur l'autre partie de rail (5a).

6. Cadre arrière selon la revendication 5, **caractérisé en ce que** dans l'état de coulage du cadre arrière une pluralité de canaux d'alimentation (60) sont prévus reliant les parties de rail (5a, 5a).

7. Cadre arrière selon la revendication 5 ou 6, **caractérisé en ce que** les parties de rail (5a, 5a) sont reliées entre elles à une première de leur extrémité, de préférence l'extrémité arrière du cadre arrière (5), et/ou **en ce que** les parties de rail (5a, 5a) sont munies de parties de raccordement, comprenant de préférence des parties de jonction supérieure (5a11) et/ou des parties de jonction inférieure (5a12) à une autre de leur extrémité, qui est de préférence l'extrémité avant du cadre arrière (5).

8. Cadre arrière selon au moins une des revendications 5 à 7, **caractérisé par** au moins un élément transversal (5b) muni d'un trou de fixation d'amortisseur de préférence circulaire (5b1), de préférence coulé sous pression, s'étendant dans la direction de l'élément transversal (5b), en particulier verticalement par rapport à la direction longitudinale du cadre arrière (5).

9. Cadre arrière selon au moins une des revendications 5 à 8, **caractérisé en ce que** des surfaces externes (5a112, 5a122) des parties de jonction (5a11, 5a12) des parties de rail (5a, 5a) sont munies de parties de trous de jonction (5a111, 5a121) de préférence coulées sous pression, s'étendant dans une direction sensiblement verticale par rapport à la direction longitudinale du cadre arrière (5) et/ou horizontalement dans un état de construction intégré du cadre arrière (5).

10. Cadre arrière selon au moins une des revendications 5 à 9, **caractérisé en ce que** les parties de rail (5a, 5a) sont munies d'éléments de nervure formés de manière unitaire (5a3, 5a4, 5a5, 5a6) s'étendant dans la direction longitudinale des parties de rail (5a, 5a) à leurs bords supérieur et/ou inférieur.

11. Cadre arrière selon la revendication 10, **caractérisé en ce que** les parties de rail (5a, 5a) comprennent une première nervure, qui est de préférence une nervure supérieure (5a6), s'étendant vers l'intérieur et/ou une seconde nervure, qui est de préférence une nervure inférieure (5a5), s'étendant vers l'extérieur du cadre arrière (5), vu en coupe dans la direction longitudinale du cadre arrière (5).

12. Cadre arrière selon au moins une des revendications 5 à 11, **caractérisé en ce que** des éléments transversaux (5b, 5b) relient les bords supérieurs des parties de rail (5a, 5a) de sorte que les parties de rail droite et gauche appariées (5a, 5a) et **en ce que** les éléments transversaux (5b, 5b) ont la forme d'un U qui s'ouvre vers le bas en coupe perpendiculaire par rapport à la direction longitudinale du véhicule (1) dans l'état monté du cadre arrière.

13. Cadre arrière selon au moins une des revendications 5 à 12, **caractérisé en ce que** chacune des parties de rail (5a, 5a) comporte une partie d'entrée (G1 à G5) à son bord inférieur et une partie de bord (5a5) s'étendant vers l'extérieur par rapport à la partie d'entrée (G1 à G5) et ayant une épaisseur supérieure à celle d'une partie de base épaisse (5a3).

14. Cadre arrière selon au moins une des revendications 5 à 13, **caractérisé en ce qu'**une première distance (D2) entre une partie de jonction (5a11) disposée au plus près de la position la plus en avant et une partie de jonction (5a12) disposée au plus près d'une partie la plus en arrière dans une direction perpendiculaire à la direction d'extraction de coulée est supérieure à une seconde distance (D1) entre une partie de jonction (5a11) disposée au plus près de la position la plus haute et une partie de jonction (5a12) disposée au plus près de la partie la plus basse dans la direction d'extraction de coulée.
